# EUROPÄISCHE PATENTSCHRIFT

(11) **EP 2 748 035 B1**
(45) Veröffentlichungstag und Bekanntmachung des Hinweises auf die Patenterteilung: **19.05.2021**
(21) Anmeldenummer: 12732639.5
(22) Anmeldetag: 02.07.2012
(51) Int. Cl.: B60Q 1/14, B60Q 1/32

(54) **VERFAHREN UND STEUERGERÄT ZUM ANPASSEN EINER LEUCHTSTÄRKE ZUMINDEST EINES SCHEINWERFERS EINES FAHRZEUGS**
METHOD AND CONTROL UNIT FOR ADAPTING THE LUMINOSITY OF AT LEAST ONE HEADLAMP OF A VEHICLE
PROCÉDÉ ET APPAREIL DE COMMANDE PERMETTANT D'ADAPTER UNE INTENSITÉ LUMINEUSE D'AU MOINS UN PROJECTEUR D'UN VÉHICULE

(30) Priorität: 23.08.2011 DE 102011081432
(43) Veröffentlichungstag der Anmeldung: 02.07.2014
(73) Patentinhaber: Robert Bosch GmbH, 70442 Stuttgart (DE)
(72) Erfinder: FOLTIN, Johannes, 71254 Ditzingen (DE)
(86) Internationale Anmeldenummer: PCT/EP2012/062797
(87) Internationale Veröffentlichungsnummer: WO 2013/026601

(56) Entgegenhaltungen:
- EP-A1- 0 985 578
- WO-A1-00/17009
- WO-A1-2004/060716
- WO-A2-01/70538
- DE-A1-102005 021 041
- DE-A1-102008 043 854
- DE-A1-102009 000 289
- GB-A- 2 337 578
- US-A1- 2010 271 195

## Beschreibung

### Stand der Technik

Die vorliegende Erfindung bezieht sich auf ein Verfahren zum Anpassen einer Leuchtstärke zumindest eines Scheinwerfers eines Fahrzeugs, auf ein Steuergerät zum Anpassen einer Leuchtstärke zumindest eines Scheinwerfers eines Fahrzeugs sowie auf ein entsprechendes Computerprogrammprodukt.

Bei Dunkelheit kann ein Fahrer eines Personenkraftwagens eine Positionsleuchte eines entgegenkommenden Lastkraftwagens nur schwer dem Lastkraftwagen zuordnen, wenn die Hauptscheinwerfer des Lastkraftwagens für den Fahrer verdeckt sind. Dadurch kann der Fahrer des Personenkraftwagens unbewusst einen Fahrer des Lastkraftwagens blenden, wenn er die Hauptscheinwerfer seines Fahrzeugs nicht abblendet.

Das Dokument DE 102 54 806 B4 zeigt ein Verfahren zur Informationsverarbeitung von wenigstens zwei Informationsquellen in einem Kraftfahrzeug.

Das Dokument GB 2 337 578 A befasst sich mit einem Fahrzeugbeleuchtungssystem unter Verwendung von Umwelterkennungseinheiten. Dieses Dokument offenbart ein Fahrzeugbeleuchtungssystem, das eine bessere Steuerung der Beleuchtung der Fahrzeugleuchten in Abhängigkeit auf diverse Wetter- und Straßenbedingungen bietet. Das Fahrzeugbeleuchtungssystem umfasst Fahrzeugleuchten, eine Umgebungserfassungseinrichtung zum Erfassen von Wetter- und Straßenoberflächenbedingungen und eine Beleuchtungssteuereinrichtung zum Steuern einer Beleuchtung der Fahrzeugleuchten auf der Grundlage der Wetter- und Straßenoberflächenbedingungen, die von der Umgebungserfassungseinrichtung empfangen werden. Das Dokument WO 00/17009A1 befasst sich mit einer kontinuierlich variablen Scheinwerfersteuerung. Das Dokument WO 2004/060716 A1 befasst sich mit einem Autolichtsystem für ein Fahrzeug.

### Offenbarung der Erfindung

Vor diesem Hintergrund wird mit der vorliegenden Erfindung ein Verfahren zum Anpassen einer Leuchtstärke zumindest eines Scheinwerfers eines Fahrzeugs, weiterhin ein Steuergerät zum Anpassen einer Leuchtstärke zumindest eines Scheinwerfers eines Fahrzeugs sowie schließlich ein entsprechendes Computer-programmprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass eine Positionsleuchte eines Fahrzeugs besser erkannt werden kann, wenn eine Helligkeit der Positionsleuchte über eine, am Ort der Positionsleuchte vorherrschende Helligkeit erhöht wird. Dadurch ergibt sich ein Helligkeitskontrast, der eine eindeutige Wahrnehmung ermöglicht.

Erfindungsgemäß wird von Scheinwerfern eines Fremdfahrzeugs eintreffendes Licht in die am Ort der Positionsleuchte vorherrschende Helligkeit einbezogen.

Dies ermöglicht es, die Positionsleuchte heller einzustellen, wenn viel Licht von den Scheinwerfern an dem Fahrzeug ankommt, beispielsweise wenn die Scheinwerfer des entgegenkommenden Fremdfahrzeugs in einem Fernlichtmodus betrieben werden. Dadurch kann das eigene Fahrzeug besser wahrgenommen werden und ein Fahrer des Fremdfahrzeugs wird veranlasst, den Fernlichtmodus zu beenden.

Die vorliegende Erfindung schafft ein Verfahren zum Anpassen einer Leuchtstärke zumindest eines Scheinwerfers eines Fahrzeugs, wobei das Verfahren die folgenden Schritte umfasst:
Ermitteln einer Beleuchtungsintensität, wobei die Beleuchtungsintensität eine Intensität am Fahrzeug einfallenden Lichts repräsentiert, wobei das einfallende Licht von einem Fremdfahrzeug emittiertes Licht repräsentiert;

Bestimmen eines Sollwerts für die Leuchtstärke des zumindest einen Scheinwerfers unter Verwendung der Beleuchtungsintensität, wobei der zumindest eine Scheinwerfer eine als oberes Begrenzungslicht des Fahrzeugs ausgeführte Positionsleuchte des Fahrzeugs ist, wobei der Sollwert für die Leuchtstärke angepasst wird, wenn die Beleuchtungsintensität zunimmt; und

Bereitstellen eines Steuersignals zum Einstellen der Leuchtstärke des zumindest einen Scheinwerfers unter Verwendung des Sollwerts, wobei das Steuersignal dazu ausgebildet ist, die Leuchtstärke der zumindest einen Positionsleuchte einzustellen;

wobei im Schritt des Bestimmens der Sollwert für die Leuchtstärke erhöht wird, wenn die Beleuchtungsintensität zunimmt.

Unter Leuchtstärke kann eine Helligkeit des zumindest einen Scheinwerfers verstanden werden. Die Beleuchtungsintensität kann einen einfallenden Lichtstrom pro Fläche repräsentieren.

Die Beleuchtungsintensität kann in einem Bereich des Fahrzeugs ermittelt werden, in dem der zumindest eine Scheinwerfer angeordnet ist. Insbesondere kann die Beleuchtungsintensität auf Höhe des zumindest einen Scheinwerfers ermittelt werden. Das Steuersignal kann an eine Schnittstelle zu dem zumindest einen Scheinwerfer ausgegeben werden, um die Leuchtstärke des zumindest einen Scheinwerfers entsprechend dem Sollwert einzustellen. Eine Erhöhung der Lichtstärke kann durchgeführt werden, um die Sichtbarkeit des Fahrzeugs zu erhöhen.

Der zumindest eine Scheinwerfer ist eine Positionsleuchte des Fahrzeugs. Dementsprechend ist das Steuersignal dazu ausgebildet, die Leuchtstärke der zumindest eine Positionsleuchte einzustellen. Die Positionsleuchten werden als obere Begrenzungslichter des Fahrzeugs verwendet. Damit können die Positionsleuchten als erstes von anderen Verkehrsteilnehmern erfasst werden. Somit kann durch das Anpassen der Leuchtstärke zumindest einer Positionsleuchte eine Sichtbarkeit des Fahrzeugs gegenüber anderen Verkehrsteilnehmern erhöht werden.

Das einfallende Licht repräsentiert von einem Fremdfahrzeug emittiertes Licht. Indem die Leuchtstärke des zumindest einen Scheinwerfers abhängig von einfallendem Licht von einem Fremdfahrzeug eingestellt wird, kann ein Fahrer des Fremdfahrzeugs aktiv auf die Anwesenheit des Fahrzeugs aufmerksam gemacht werden, so dass der Fahrer des Fremdfahrzeugs beispielsweise von einem Fernlichtmodus in einen Abblendlichtmodus wechselt.

Der Sollwert kann angepasst werden, wenn die Beleuchtungsintensität sinkt. Insbesondere kann der Sollwert erniedrigt werden, wenn die Beleuchtungsintensität sinkt. Dadurch kann ein zu großer Kontrast zwischen dem Scheinwerfer und der Umgebung vermieden werden und eine Blendung anderer Verkehrsteilnehmer verhindert werden. Alternativ kann der Sollwert erhöht werden, wenn die Beleuchtungsintensität sinkt. Dies ist für den Fall relevant, in dem die Beleuchtungsintensität aufgrund eines entgegenkommenden Fahrzeugs zuvor verringert wurde.

Der Sollwert kann ferner unter Verwendung eines Abstands eines Fremdfahrzeugs von dem Fahrzeug bestimmt werden. Beispielsweise kann der Sollwert bei gleicher Beleuchtungsintensität auf einen größeren Wert eingestellt werden, wenn das Fremdfahrzeug weiter entfernt ist, und auf einen kleineren Wert eingestellt werden, wenn sich das Fremdfahrzeug näher am eigenen Fahrzeug befindet, da die wahrnehmbare Helligkeit des Scheinwerfers mit steigender Entfernung abnimmt. Dadurch kann das Fahrzeug aus einer großen Entfernung erfasst werden.

Der Sollwert kann ferner unter Berücksichtigung eines Lichtszenarios an dem Fremdfahrzeug bestimmt werden. Dazu kann in einem Schritt des Unterscheidens ein erstes Lichtszenario am Fremdfahrzeug von zumindest einem zweiten Lichtszenario am Fremdfahrzeug unterschieden werden, und der Sollwert kann ferner unter Verwendung des aktuellen Lichtszenarios bestimmt werden. Beispielsweise kann das erste Lichtszenario ein Fernlichtmodus sein. Das zweite Lichtszenario kann beispielsweise ein Abblendlichtmodus sein. Das Lichtzenario kann mit Hilfe einer Bildauswertung und gespeicherten charakteristischen Vergleichszenarios bestimmt werden. Der Sollwert kann größer sein, wenn das Fremdfahrzeug im Fernlichtmodus fährt, um mehr Aufmerksamkeit zu erzeugen.

Das Steuersignal kann bereitgestellt werden, wenn der zumindest eine Scheinwerfer durch einen Aktivierungsimpuls eines Aktivierungssignals in Betrieb genommen wird. Dabei kann das Aktivierungssignal ein von einem Fahrer des Fahrzeugs, beispielsweise über die Betätigung eines Hebels oder Schalters, bereitstellbares Signal repräsentieren. Somit kann der zumindest eine Scheinwerfer gleich nach seiner Aktivierung auf eine an die Beleuchtungsintensität angepasste Leuchtstärke eingestellt werden.

Der zumindest eine Scheinwerfer kann ein Hauptscheinwerfer des Fahrzeugs sein. Dann kann das Steuersignal anstelle der Verwendung des Sollwerts unter Verwendung eines Normwerts bereitgestellt werden, wenn der der Aktivierungsimpuls länger als eine vorbestimmte Zeitdauer andauert. Der Normwert kann einer normalen Leuchtstärke entsprechen, wie sie bei herkömmlichen Scheinwerfern eingestellt ist. Die Verwendung des Normwerts kann sinnvoll sein, wenn der Fahrer seine Sichtweite, beispielsweise aufgrund einer Gefahrensituation, erhöhen möchte.

Ferner kann im Schritt des Bereitstellens das Steuersignal anstelle der Verwendung des Sollwerts unter Verwendung eines vorbestimmten Maximalwerts bereitgestellt werden, wenn der Aktivierungsimpuls länger als eine vorbestimmte weitere Zeitdauer andauert, und/oder sich kein Fremdfahrzeug in einem Blendungsbereich des zumindest einen Scheinwerfers befindet. Ein Maximalwert kann eine maximal zerstörungsfrei mögliche Helligkeit des Scheinwerfers repräsentieren. Durch eine vergrößerte Helligkeit des zumindest einen Scheinwerfers kann ein Bereich vor dem Fahrzeug besonders gut ausgeleuchtet werden, um beispielsweise eine Gefahrenstelle besser einsehen zu können. Nach Ablauf einer vorbestimmten Zeitspanne kann das Steuersignal erneut unter Verwendung des Sollwerts oder des Normwerts bereitgestellt werden, um den zumindest einen Scheinwerfer nicht zu überlasten.

Die vorliegende Erfindung schafft ferner ein Steuergerät zum Anpassen einer Leuchtstärke zumindest eines Scheinwerfers eines Fahrzeugs, wobei das Steuergerät ausgebildet ist, um die Schritte eines Verfahrens gemäß einem der vorangegangenen Ansprüche auszuführen. Beispielsweise kann das Steuergerät eine Einrichtung zum Ermitteln einer Beleuchtungsintensität, wobei die Beleuchtungsintensität eine Intensität am Fahrzeug einfallenden Lichts repräsentiert, eine Einrichtung zum Bestimmen eines Sollwerts für die Leuchtstärke des zumindest einen Scheinwerfers unter Verwendung der Beleuchtungsintensität, wobei der Sollwert für die Leuchtstärke angepasst wird, wenn die Beleuchtungsintensität zunimmt, und eine Einrichtung zum Bereitstellen eines Steuersignals zum Einstellen der Leuchtstärke des zumindest einen Scheinwerfers unter Verwendung des Sollwerts aufweisen.

Auch durch diese Ausführungsvariante der Erfindung in Form eines Steuergeräts kann die der Erfindung zugrunde liegende Aufgabe schnell und effizient gelöst werden. Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Darstellung eines Fahrzeugs mit einem Steuergerät zum Anpassen einer Leuchtstärke zumindest eines Scheinwerfers des Fahrzeugs gemäß einem Ausführungsbeispiel der vorliegenden Erfindung;
- Fig. 2: ein Ablaufdiagramm eines Verfahren zum Anpassen einer Leuchtstärke zumindest eines Scheinwerfers eines Fahrzeugs gemäß einem Ausführungsbeispiel der vorliegenden Erfindung; und
- Fig. 3: eine Darstellung einer Verkehrssituation eines Fahrzeugs mit Positionsleuchten, die gemäß einem Ausführungsbeispiel der vorliegenden Erfindung angesteuert werden.

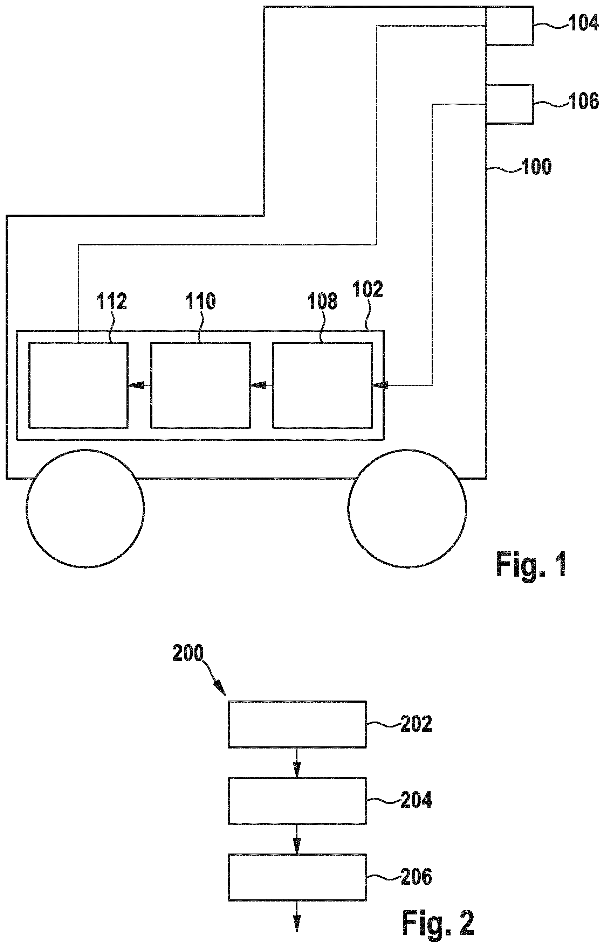

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird. Fig. 1 zeigt eine Darstellung eines Fahrzeugs 100 mit einem Steuergerät 102 zum Anpassen einer Leuchtstärke zumindest eines Scheinwerfers 104 des Fahrzeugs 100, gemäß einem Ausführungsbeispiel der vorliegenden Erfindung.

Das Steuergerät 102 ist ausgebildet, um Daten von einem lichtempfindlichen Sensor 106, beispielsweise einer Kamera, zu empfangen. Das Steuergerät 102 weist eine Einrichtung zum Ermitteln 108, eine Einrichtung zum Bestimmen 110 sowie eine Einrichtung zu Bereitstellen 112 auf. Die Einrichtung zum Ermitteln 108 ist dazu ausgebildet, um basierend auf den Daten von dem lichtempfindlichen Sensor 106 eine Beleuchtungsintensität zu ermitteln, die in den Sensor 106 einfallendes Licht repräsentiert. Die Einrichtung zum Bestimmen 110 ist dazu ausgebildet, einen Sollwert für die Leuchtstärke des Scheinwerfers 104 unter Verwendung der Beleuchtungsintensität zu bestimmen. Dabei steigt der Sollwert, wenn die Beleuchtungsintensität steigt. Die Einrichtung zum Bestimmen 110 kann ausgebildet sein, um den Sollwert durch einen Vergleich einer aktuell ermittelten Beleuchtungsintensität mit einer zeitlich zuvor ermittelten Beleuchtungsintensität oder einem oder mehreren gespeicherten Vergleichswerten zu ermitteln.

Die Einrichtung zum Bereitstellen 112 ist dazu ausgebildet, unter Verwendung des Sollwerts ein Steuersignal zum Einstellen der Leuchtstärke des zumindest einen Scheinwerfers 104 bereitzustellen. Das Steuersignal ist dazu ausgebildet die Leuchtstärke des zumindest einen Scheinwerfers 104 einzustellen.

Der Sensor 106 ist am Fahrzeug 100 im Bereich des zumindest einen Scheinwerfers 104 angeordnet. In diesem Ausführungsbeispiel ist der Scheinwerfer 104 ein Positionslicht 104, das oben am Fahrzeug 100 angeordnet ist. Das Fahrzeug 100 ist ein hohes Fahrzeug, wie beispielsweise ein Lastkraftwagen. Das Fahrzeug 100 kann auch beispielsweise ein hoher Anhänger sein. Da Hauptscheinwerfer des Fahrzeugs 100 eine maximal zulässige Höhe über der Straße nicht überschreiten dürfen, weist das Fahrzeug 100 Positionslichter 104 auf, die Umrisse des Fahrzeugs 104 andere Verkehrsteilnehmer erkennbar machen sollen, wenn die anderen Verkehrsteilnehmer die Hauptscheinwerfer nicht erkennen können.

Wenn ein Fremdfahrzeug dem Fahrzeug 100 entgegenkommt und die Hauptscheinwerfer des Fahrzeugs 100 für den Fahrer des Fremdfahrzeugs verdeckt sind, kann es vorkommen, dass ein Fahrer des Fremdfahrzeugs trotz des entgegenkommenden Fahrzeugs 100 seine Scheinwerfer weiterhin in einem Fernlichtmodus betreibt. Dadurch kann ein Fahrer des Fahrzeugs 100 geblendet werden. In diesem Fall fällt am Sensor 106 eine größere Lichtmenge ein, als wie wenn die Scheinwerfer des Fremdfahrzeugs im Abblendlichtmodus betrieben werden würden. Der Effekt der Scheinwerfer des Fremdfahrzeugs bewirkt also, dass die Einrichtung zum Ermitteln 108 eine erhöhte Beleuchtungsintensität ermittelt. Aufgrund der erhöhten Beleuchtungsintensität bestimmt die Einrichtung zum Bestimmen 110 einen größeren Sollwert für die Leuchtstärke der Positionslichter 104. Aufgrund des größeren Sollwerts stellt die Einrichtung zum Bereitstellen 112 ein Steuersignal für die Positionslichter 104 bereit, das dazu ausgebildet ist die Positionslichter 104 mit einer größeren Leuchtstärke zu betreiben. Aufgrund der größeren Leuchtstärke der Positionslichter 104 wird das Fahrzeug 100 besser erkennbar. Der Fahrer des Fremdfahrzeugs kann das Fahrzeug 100 erkennen und von dem Fernlichtmodus in den Abblendlichtmodus wechseln. Die Blendung für den Fahrer des Fahrzeugs 100 lässt daraufhin nach oder verschwindet ganz. Entsprechend dazu ermittelt die Einrichtung zum Ermitteln 108 eine geringere Beleuchtungsintensität. Aufgrund der geringeren Beleuchtungsintensität bestimmt die Einrichtung zum Bestimmen 110 einen niedrigeren Sollwert für die Leuchtstärke der Positionslichter 104. Aufgrund des niedrigeren Sollwerts stellt die Einrichtung zum Bereitstellen 112 ein Steuersignal für die Positionslichter 104 bereit, das dazu ausgebildet ist die Positionslichter 104 mit einer niedrigeren Leuchtstärke zu betreiben. Auf diese Weise wird wiederum ein Blenden des Fahrers des entgegenkommenden Fremdfahrzeugs vermieden.

Fig. 2 zeigt ein Ablaufdiagramm eines Verfahrens 200 zum Anpassen einer Leuchtstärke zumindest eines Scheinwerfers eines Fahrzeugs gemäß einem Ausführungsbeispiel der vorliegenden Erfindung. Das Verfahren 200 kann auf einem Steuergerät, wie es in Fig. 1 dargestellt ist, ausgeführt werden. Das Verfahren 200 weist einen Schritt des Ermittelns 202, einen Schritt des Bestimmens 204 sowie einen Schritt des Bereitstellens 206 auf. Im Schritt des Ermittelns 202 wird eine Beleuchtungsintensität ermittelt, die am Fahrzeug einfallendes Licht repräsentiert. Im Schritt des Bestimmens 204 wird unter Verwendung der Beleuchtungsintensität ein Sollwert für die Leuchtstärke des zumindest einen Scheinwerfers bestimmt, wobei der Sollwert verändert wird wenn die Beleuchtung steigt. Im Schritt des Bereitstellens 206 wird unter Verwendung des Sollwerts ein Steuersignal bereitgestellt. Das Steuersignal ist dazu ausgebildet, die Leuchtstärke zumindest eines Scheinwerfers oder einer anderen Lichtquelle des Fahrzeugs einzustellen.

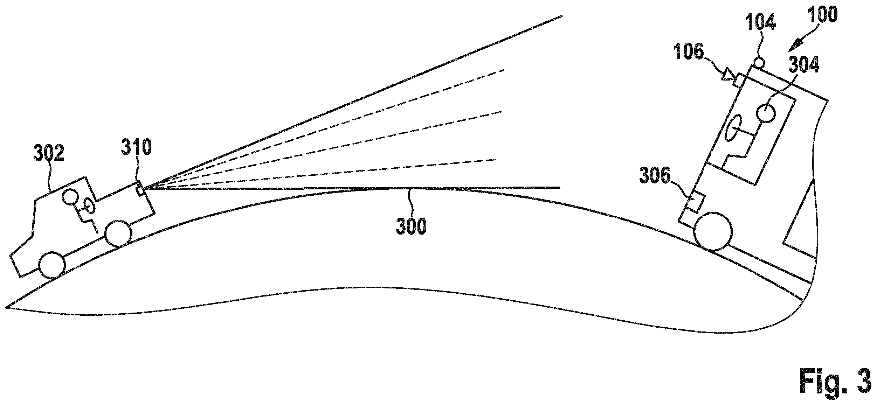

Fig. 3 zeigt eine Blendungssituation eines Lastkraftwagens (LKWs) 100 an einer Kuppe 300. Der Lastkraftwagen 100 weist Positionsleuchten 104, eine Kamera 106 und eine Steuergerät zum Anpassen einer Leuchtstärke der Positionsleuchten 104 gemäß einem Ausführungsbeispiel der vorliegenden Erfindung auf. Das Steuergerät kann entsprechend dem anhand von Fig. 1 beschrieben Steuergerät ausgeführt sein.

Die Helligkeit der Positionsleuchten 104 des Lastkraftwagens 100 wird mit Hilfe der Kamera 106 gesteuert, damit der Lastkraftwagen 100 frühzeitig erkannt wird. Wird der Lastkraftwagen 100 frühzeitig erkannt, z.B. bei der gezeigten Kuppe 300 durch einen Fahrer eines entgegenkommenden Personenkraftwagens, so kann von dem Fahrer des Personenkraftwagens 302 rechtzeitig abgeblendet werden. Bei dem Lastkraftwagen 100 sitzt der Fahrer 304 deutlich über den Scheinwerfern 306 des Lastkraftwagens 100. Daher sind am Lastkraftwagen 100 die Positionsleuchten 104 angebracht, so dass der Lastkraftwagen 100 auch bei einer geometrischen Verdeckung der Scheinwerfer 306, z.B. an der Kuppe 300, rechtzeitig erkannt wird, sofern die Positionsleuchten 104 hell genug leuchten.

Auf der linken Seite der Fig. 3 ist der Personenkraftwagen 302 zu sehen, dessen Scheinwerfer 310 mit Fernlicht betrieben werden. Durch die Kuppe 300 sind die Scheinwerfer 306 des Lastkraftwagens 100 für den Fahrer des Personenkraftwagens 302 nicht sichtbar. Der Fahrer des Personenkraftwagens 302 kann nur die Positionsleuchten 104 des Lastkraftwagens 100 sehen. Sind die Positionsleuchten 104 zu schwach, werden sie von dem Fahrer des Personenkraftwagens 302 nicht wahrgenommen und der Personenkraftwagen 302 verbleibt im Fernlicht, was zur Blendung des Fahrers 304 des Lastkraftwagens 100 führt.

Eine stetige Verbesserung "Aufrüstung" der (PKW-)Scheinwerfer mit immer höheren Lichtströmen führt aufgrund einer Blendungsproblematik gleichzeitig zu einem "Aufrüsten" der LKW-Beleuchtung. Beispielsweise werden bereits LKWs ähnlich stark beleuchtet wie Schaustellerfahrzeuge oder mit blauen Lichtern, z.B. im Führerhaus, ausgerüstet. Beides kann zu einer Irritation anderer Verkehrsteilnehmer führen.

Da Unfälle mit LKWs meist schwerwiegende Folgen haben, werden in diesen Fahrzeugen immer mehr Sicherheitsfunktionen integriert. Beispielsweise kann eine Spurverlassenswarnung integriert werden, die über eine Kamera, welche die Fahrbahnmarkierungen erkennt vor einem Verlassen der Fahrspur warnt. Systeme, wie Forward Collision Warning Systems (FCW) können über Radar-, aber auch Video- Kameras realisiert werden. Fernlichtassistenten setzen sich im PKW-Segment immer weiter durch. Für eine Detektion wird ein Kamerabild binärisiert. Dazu werden Helligkeitswerte im Bild anhand eines Schwellenwerts unterschieden. Lichtquellen, die schwächer als der Schwellenwert leuchten, also zu schwach sind, werden häufig nicht erkannt oder z.B. als Reflektor klassifiziert.

Gemäß einem Ausführungsbeispiel erkennt ein lichtempfindliches Element 106 des LKWs 100, z.B. die Kamera 106, eine (potentielle) Blendung des LKW-Fahrers 304 und passt die Helligkeit der Positionsleuchten 104 aufgrund der Blendung an. Durch die Anpassung der Helligkeit der Positionsleuchten 104 kann der LKW 100 rechtzeitig erkannt werden und die Lichtverteilung des entgegenkommenden Fahrzeugs 302 angepasst werden, z.B. in dem der Fahrer des entgegenkommenden Fahrzeugs 302 abblendet. Dadurch kann ein lichttechnisches "Aufrüsten" mit kontinuierlich stärkerer LKW-Beleuchtung 306 die ausschließlich zum Signalbild beiträgt, wie Tagfahrlicht, nicht jedoch zur Erhöhung der Sichtweite beiträgt, verhindert werden. Durch die Anpassung der Helligkeit der Positionsleuchten 104 kann der LKW 100 immer rechtzeitig erkannt werden und Irritationen anderer Verkehrsteilnehmer 302 können vermieden werden.

Gemäß einem Ausführungsbeispiel wird die Kamera bzw. das lichtempfindliche Element 106 im LKW 100, ungefähr auf Höhe des Fahrerkopfes 304 oder in der Nähe der Positionsleuchten 104 angebracht. Das lichtempfindliche Element 106 erkennt die Helligkeit, die am Fahrerauge ankommt. Die Helligkeit setzt sich dabei aus der Umgebungshelligkeit und Blendungs-Licht zusammen. Je größer die Helligkeit ist, desto heller werden die Positionsleuchten 104 eingestellt. Das lichtempfindliche Element 106 ist beispielsweise vor einer direkten Einstrahlung von Licht aus den Positionsleuchten 104 geschützt, da durch die Mit-Kopplung, statt Gegenkopplung wie meist in der Regelungstechnik, die Positionsleuchten 104 sonst immer heller eingestellt werden würden. Bei Tag ist somit eine gute Sichtbarkeit gegeben (Tagfahrlicht = Daytime Running Lamps (DRL)). Bei Nacht wird eine Blendung anderer Verkehrsteilnehmer 302 durch die Positionsleuchten 104 verhindert, da durch das geringe Umgebungslicht die Positionsleuchten 104 nicht so hell eingestellt werden.

Fährt das Fahrzeug 302 mit Fernlicht dem LKW 100 entgegen, erhöht sich die Helligkeit am Fahrerauge und die Positionsleuchten 104 werden heller eingestellt. Der entgegenkommende Fahrer 302, der die Scheinwerfer des LKWs 306 aufgrund der Kuppe 300 nicht sehen kann, hat dann die Möglichkeit die Positionsleuchten 104 zu sehen und seine Scheinwerfer 310 abzublenden.

Handelt es sich bei dem lichtempfindlichen Element 106 um eine Kamera, kann zusätzlich das Vorhandensein anderer Verkehrsteilnehmer, deren Position und/ oder deren Anzahl ausgewertet werden, um Fehlansteuerungen zu vermeiden.

Ebenso kann mit der Kamera 106 eine "Fernlicht-Erkennungseinheit" realisiert werden, die erkennt, ob sich ein anderes Fahrzeug 302 im Fern- oder Abblendlicht befindet. Befindet sich das andere Fahrzeug 302 im Abblendlicht, wird die Helligkeit der Positionsleuchten 104 nicht oder kaum erhöht, um den anderen Fahrer 302 nicht zu blenden oder zu irritieren.

Entsprechend der Ansteuerung der Positionsleuchten 104 können auch die Scheinwerfer 306 des LKWs 100 angesteuert werden. Dabei kann bei der Ansteuerung der Scheinwerfer 306 jedoch die potentielle Blendwirkung durch die Scheinwerfer 306 bei der Einstellung der Helligkeit der Scheinwerfer 306 berücksichtigt werden. Beispielsweise können die Scheinwerfer 306 aufgrund des sich annähernden Fahrzeugs 302 gedimmt werden.

Gemäß einem Ausführungsbeispiel kann der hier vorgestellte Ansatz sowohl bei LKWs als auch bei PKWs, Motorrädern und anderen Kraftfahrzeugen genutzt werden, z.B. bei Tagfahrlicht. Beispielsweise kann ein Fahrer eines Fahrzeugs über die Lichtsignalanlage auf sich aufmerksam machen, wenn Fahrzeuge aufgeblendet entgegenkommen. Dies kann durch kontinuierliches erhöhen der Helligkeit der Scheinwerfer oder eine Art Lichthupe erfolgen.

Ebenfalls können Positionsleuchten an einem Anhänger, beispielsweise einem Wohnwagen vom Zugfahrzeug oder durch ein eigenständiges Steuergerät entsprechend dem einfallenden Licht gesteuert werden.

Fernlicht wird benötigt, um weite Bereiche bei Nacht auszuleuchten. Der zulässige Lichtstrom, der bei Fernlicht aus dem Scheinwerfer 306 austreten darf, ist deutlich höher als der von Abblendlicht. Dadurch können auch weit entfernte Gefahrenquellen erkannt werden. Fernlicht wird häufig als "Lichthupe" zur Warnung anderer Verkehrsteilnehmer 302 genutzt. Das helle Fernlicht trägt bei Tag zu einer Sichtbarkeit der Lichthupe bei, bei Nacht führt die Lichthupe zu Blendung. Der geblendete andere Verkehrsteilnehmer 302 nimmt zwar die Warnung wahr, jedoch ist er kurzzeitig geblendet.

Die Helligkeit von Fernlicht kann bei Kraftfahrzeugen, beispielsweise bei LKWs oder PKWs 100 angepasst, beispielsweise gedimmt werden, wenn sich andere Fahrzeuge 302 im Bild der Kamera 106 befinden. LKWs 100 haben ein sehr starkes Fernlicht 306, das bei Aufblenden als Lichthupe zu starker Blendung führt. Wenn das Fernlicht 306 ausschließlich als Signalisierung dienen soll, reicht eine geringere Lichtstärke. Der Wunsch der Signalisierung kann über das Vorhandensein anderer Verkehrsteilnehmer 302 und zusätzlich oder alternativ über die Umgebungshelligkeit ermittelt werden. Entsprechend kann eine Fernlichtstärke in Abhängigkeit von einer Objekterkennung angepasst werden, mit der beispielsweise sich im Einflussbereich der Scheinwerfer befindliche Verkehrsteilnehmer 302 erkannt werden können.

Ein sogenanntes "Gefahrenlicht" kann automatisch Objekte anleuchten, um die Aufmerksamkeit des Fahrers 304 auf die Gefahr zu lenken. Jedoch kann eine Objektdetektion nicht alle möglichen Fälle abdecken, wodurch der Fahrer weiterhin aufmerksam den Verkehrsraum überwachen muss. Je nach Entfernung, Position und Kontrast des Objektes, z.B. ein Reh, kann sich der Fahrer 304 mehr Licht als durch Fernlicht möglich, wünschen.

Ein vorausschauendes Sensorsystem, das z.B. die Kamera 106 umfasst, erkennt andere Verkehrsteilnehmer 302 und kann deren Entfernung evtl. über einen weiteren Sensor schätzen. Wenn sich ein anderer Verkehrsteilnehmer 302 vor dem Fahrzeug 100 befindet und der Fahrer 304 den Fernlichthebel aktiviert, wird die Stärke des Fernlichts so weit angepasst, dass der andere Fahrer 302 die Warnung (Lichthupe) wahrnehmen kann, jedoch nicht oder nur in einem gewissen Maß geblendet wird. Genau genommen führt jede Lichtquelle zu einer gewissen "Blendung". Eine Lichthupe ist als warnende Funktion nur durch ein gewisses Maß an Blendung wirksam. Die Helligkeit des Abblendlichtes kann erhalten bleiben.

Die Lichtstärke nimmt quadratisch mit der Entfernung ab. Wenn die Entfernung zu dem anderen Verkehrsteilnehmer 302 geschätzt/ gemessen wird, evtl. über eine weitere Sensorik, kann die Lichtstärke genauer angepasst werden.

Ergänzend kann, wenn der Fernlichthebel länger als eine gewisse Zeit aktiviert ist, davon ausgegangen werden, dass der Fahrer 304 keine Lichthupe durchführen will, sondern seine Sichtweite wegen ggf. einer erkannten/vermuteten Gefahr (z.B. Wild) erhöhen muss. Die Beschränkung der Lichtstärke wird dann aufgehoben und eine Lichtstärke wie bei normalem Fernlicht zur Verfügung gestellt.

Falls kein Verkehrsteilnehmer im Bild ist und der Fahrer 304 das Fernlicht ähnlich zur Lichthupe aktiviert, kann der Lichtstrom auch über den Normal-Lichtstrom angehoben werden, um den Bereich vor dem Fahrzeug noch stärker auszuleuchten und so potentielle Gefahrenquellen besser sichtbar zu machen. Da der erhöhte Lichtstrom den Scheinwerfer 306 schädigen kann, kann er nach einer vorgegebenen Zeit wieder auf ein Normalmaß zurückgeführt werden.

Das System kann auch mit einem normalen (adaptiven) Fernlichtassistenten kombiniert werden, wobei der Fahrer 304 das System dauerhaft oder temporär zum Aufblenden überstimmen kann, z.B. als Lichthupe. Falls der Fahrer 304 einen Fernlichtassistenten einsetzt und dieser auf eine fernlichtähnliche Verteilung eingestellt ist, während der Fahrer 304 den Fernlichthebel betätigt, kann sofort der erhöhte Lichtstrom abgestrahlt werden. Die Aktivierung beider Funktionen kann abhängig von der Aktivierungszeit der Fernlichtfunktion erfolgen. Es besteht somit eine Unterscheidung zwischen Lichthupe und Aufblenden.

Bei einer "blendfreien Lichthupe" kann der Scheinwerfer 306 bei Anwesenheit anderer Verkehrsteilnehmer 302 gedimmt werden. Bei einem "Gefahren-Fernlicht" kann die Lichtstärke erhöht werden, wenn kein anderer Verkehrsteilnehmer vorhanden ist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Die im Zusammenhang mit einem LKW beschriebenen Ausführungsbeispiele können entsprechend bei anderen Fahrzeugen, insbesondere auch bei PKWs, eingesetzt werden. Ferner können erfindungsgemäße Verfahrensschritte wiederholt sowie in einer anderen als in der beschriebenen Reihenfolge ausgeführt werden. Die Erfindung ist nur durch die beigelegte Ansprüche limitiert.

## Patentansprüche

1. Verfahren (200) zum Anpassen einer Leuchtstärke zumindest eines Scheinwerfers (104; 306) eines Fahrzeugs (100), wobei das Verfahren die folgenden Schritte umfasst:
Ermitteln (202) einer Beleuchtungsintensität, wobei die Beleuchtungsintensität eine Intensität am Fahrzeug (100) einfallenden Lichts repräsentiert, wobei das einfallende Licht von einem Fremdfahrzeug (302) emittiertes Licht repräsentiert;
Bestimmen (204) eines Sollwerts für die Leuchtstärke des zumindest einen Scheinwerfers (104; 306) unter Verwendung der Beleuchtungsintensität, wobei der zumindest eine Scheinwerfer (104) eine als oberes Begrenzungslicht des Fahrzeugs (100) ausgeführte Positionsleuchte des Fahrzeugs (100) ist,
wobei der Sollwert für die Leuchtstärke angepasst wird, wenn die Beleuchtungsintensität zunimmt; und
Bereitstellen (206) eines Steuersignals zum Einstellen der Leuchtstärke des zumindest einen Scheinwerfers (104; 306) unter Verwendung des Sollwerts, wobei das Steuersignal dazu ausgebildet ist, die Leuchtstärke der zumindest einen Positionsleuchte einzustellen;
wobei im Schritt des Bestimmens der Sollwert für die Leuchtstärke erhöht wird, wenn die Beleuchtungsintensität zunimmt.

2. Verfahren (200) gemäß einem der vorangegangenen Ansprüche, bei dem im Schritt des Bestimmens (204) der Sollwert angepasst wird, wenn die Beleuchtungsintensität sinkt. Schritt des Bestimmens (204) der Sollwert angepasst wird. wenn die Beeuchtungsintensität sinkt.

3. Verfahren (200) gemäß einem der vorangegangenen Ansprüche, bei dem im Schritt des Bestimmens (204) der Sollwert ferner unter Verwendung eines Abstands eines Fremdfahrzeugs (302) von dem Fahrzeug (100) bestimmt wird. Schritt des Bestimmens (204) der Sollwert ferner unter Verwendung eines

4. Verfahren (200) gemäß einem der vorangegangenen Ansprüche, bei dem im Schritt des Bestimmens (204) der Sollwert ferner unter Berücksichtigung eines Lichtszenarios, wie beispielsweise Fernlichtmodus oder Abblendlichtmodus, an dem Fremdfahrzeug (302) bestimmt wird.

5. Verfahren (200) gemäß einem der vorangegangenen Ansprüche, bei dem im Schritt des Bereitstellens (206) das Steuersignal kontinuierlich bereitgestellt wird, nachdem der zumindest eine Scheinwerfer (104, 306) durch einen Aktivierungsimpuls eines Aktivierungssignals in Betrieb genommen worden ist, wobei das Aktivierungssignal ein von einem Fahrer des Fahrzeugs bereitstellbares Signal repräsentiert.

6. Verfahren (200) gemäß Anspruch 5, bei dem im Schritt des Bereitstellens (206) das Steuersignal anstelle der Verwendung des Sollwerts unter Verwendung eines Normwerts bereitgestellt wird, wenn der Aktivierungsimpuls länger als eine vorbestimmte Zeitdauer andauert.

7. Verfahren (200) gemäß einem der Ansprüche 5 oder 6, bei dem im Schritt des Bereitstellens (206) das Steuersignal anstelle der Verwendung des Sollwerts unter Verwendung eines vorbestimmten Maximalwerts bereitgestellt wird, wenn der Aktivierungsimpuls länger als eine vorbestimmte weitere Zeitdauer andauert, und/oder sich kein Fremdfahrzeug (302) in einem Blendungsbereich des zumindest einen Scheinwerfers (104, 306) befindet.

8. Steuergerät (102) zum Anpassen einer Leuchtstärke zumindest eines Scheinwerfers (104) eines Fahrzeugs (100), wobei das Steuergerät (102) ausgebildet ist, um die Schritte eines Verfahrens gemäß einem der vorangegangenen Ansprüche auszuführen.

9. Computer-Programmprodukt mit Programmcode zur Durchführung des Verfahrens nach einem der Ansprüche 1 bis 7, wenn das Programm auf einer Vorrichtung ausgeführt wird.

## Claims

1. Method (200) for adapting a luminosity of at least one headlight (104; 306) of a vehicle (100), wherein the method comprises the following steps:
ascertaining (202) an illumination intensity, wherein the illumination intensity represents an intensity of light that is incident on the vehicle (100), wherein the incident light represents light that has been emitted by another vehicle (302);
determining (204) a target value for the luminosity of the at least one headlight (104; 306) using the illumination intensity, wherein the at least one headlight (104) is a position lamp of the vehicle (100) embodied as an upper limit light of the vehicle (100),
wherein the target value for the luminosity is adapted if the illumination intensity increases; and
providing (206) a control signal for setting the luminosity of the at least one headlight (104; 306) using the target value, wherein the control signal is configured for setting the luminosity of the at least one position lamp;
wherein, in the determination step, the target value for the luminosity is increased if the illumination intensity increases.

2. Method (200) according to one of the preceding claims, in which the target value is adapted in the determination step (204) if the illumination intensity decreases.

3. Method (200) according to either of the preceding claims, in which, in the determination step (204), the target value is furthermore determined using a distance of another vehicle (302) from the vehicle (100).

4. Method (200) according to one of the preceding claims, in which, in the determination step (204), the target value is furthermore determined taking into account a light scenario, such as for example high-beam mode or low-beam mode, at the other vehicle (302).

5. Method (200) according to one of the preceding claims, in which, in the provision step (206), the control signal is provided continuously after the at least one headlight (104, 306) was put into operation by an activation pulse of an activation signal, wherein the activation signal represents a signal that is providable by a driver of the vehicle.

6. Method (200) according to Claim 5, in which, in the provision step (206), the control signal is provided using a standard value rather than the target value if the activation pulse continues for longer than a predetermined time period.

7. Method (200) according to one of Claims 5 or 6, in which, in the provision step (206), the control signal is provided using a predetermined maximum value rather than the target value if the activation pulse continues for longer than a predetermined further time period and/or no other vehicle (302) is located within a dazzle region of the at least one headlight (104, 306).

8. Control device (102) for adapting a luminosity of at least one headlight (104) of a vehicle (100), wherein the control device (102) is configured for performing the steps of a method according to one of the preceding claims.

9. Computer program product with program code for performing the method according to one of Claims 1 to 7, when the program is executed on an apparatus.

## Revendications

1. Procédé (200) permettant d'adapter une intensité lumineuse d'au moins un phare (104 ; 306) d'un véhicule (100), le procédé comprenant les étapes suivantes consistant à :
établir (202) une intensité d'éclairage, l'intensité d'éclairage représentant une intensité d'une lumière incidente sur le véhicule (100), la lumière incidente représentant une lumière émise par un véhicule tiers (302) ;
déterminer (204) une valeur de consigne pour l'intensité lumineuse de l'au moins un phare (104 ; 306) en utilisant l'intensité d'éclairage, l'au moins un phare (104) étant un feu de position du véhicule (100) réalisé sous la forme d'un feu de signalisation supérieur du véhicule (100),
la valeur de consigne pour l'intensité lumineuse étant adaptée si l'intensité d'éclairage augmente ; et
fournir (206) un signal de commande pour régler l'intensité lumineuse de l'au moins un phare (104 ; 306) en utilisant la valeur de consigne, le signal de commande étant réalisé pour régler l'intensité lumineuse de l'au moins un feu de position ;
dans lequel, à l'étape de détermination, la valeur de consigne pour l'intensité lumineuse est augmentée si l'intensité d'éclairage augmente.

2. Procédé (200) selon l'une quelconque des revendications précédentes, dans lequel, à l'étape de détermination (204), la valeur de consigne est adaptée si l'intensité d'éclairage diminue.

3. Procédé (200) selon l'une quelconque des revendications précédentes, dans lequel, à l'étape de détermination (204), la valeur de consigne est en outre déterminée en utilisant une distance d'un véhicule tiers (302) par rapport au véhicule (100).

4. Procédé (200) selon l'une quelconque des revendications précédentes, dans lequel, à l'étape de détermination (204), la valeur de consigne est en outre déterminée en tenant compte d'un scénario de lumière, comme par exemple d'un mode de feux de route ou d'un mode de feux de croisement, au niveau du véhicule tiers (302) .

5. Procédé (200) selon l'une quelconque des revendications précédentes, dans lequel, à l'étape de fourniture (206), le signal de commande est fourni en continu après que l'au moins un phare (104, 306) a été mis en service par une impulsion d'activation d'un signal d'activation, le signal d'activation représentant un signal pouvant être fourni par un conducteur du véhicule.

6. Procédé (200) selon la revendication 5, dans lequel, à l'étape de fourniture (206), au lieu d'utiliser la valeur de consigne, le signal de commande est fourni en utilisant une valeur normale si l'impulsion d'activation dure plus longtemps qu'une durée prédéterminée.

7. Procédé (200) selon l'une quelconque des revendications 5 et 6, dans lequel, à l'étape de fourniture (206), au lieu d'utiliser la valeur de consigne, le signal de commande est fourni en utilisant une valeur maximale prédéterminée si l'impulsion d'activation dure plus longtemps qu'une autre durée prédéterminée et/ou si aucun véhicule tiers (302) ne se trouve dans une zone d'éblouissement de l'au moins un phare (104, 306).

8. Appareil de commande (102) permettant d'adapter une intensité lumineuse d'au moins un phare (104) d'un véhicule (100), l'appareil de commande (102) étant réalisé pour exécuter les étapes d'un procédé selon l'une quelconque des revendications précédentes.

9. Produit de programme informatique comprenant du code programme pour exécuter le procédé selon l'une quelconque des revendications 1 à 7 si le programme est exécuté sur un dispositif.
